# EUROPÄISCHE PATENTSCHRIFT

(11) **EP 0 640 260 B1**
(45) Veröffentlichungstag und Bekanntmachung des Hinweises auf die Patenterteilung: **27.11.1996**
(21) Anmeldenummer: 93911428.6
(22) Anmeldetag: 03.05.1993
(51) Int. Cl.: H04B 7/26, H04Q 7/36

(54) **MOBILES FUNKNETZ MIT ZENTRALER AUSLEUCHTUNG DER ZELLEN**
MOBILE RADIO NETWORK WITH CENTRAL CELL BEAMING
RESEAU MOBILE DE STATIONS RADIO AVEC ''ARROSAGE'' CENTRAL DES CELLULES

(30) Priorität: 15.05.1992 DE 4216079
(43) Veröffentlichungstag der Anmeldung: 01.03.1995
(73) Patentinhaber: SIEMENS AKTIENGESELLSCHAFT, 80333 München (DE)
(72) Erfinder: RITTER, Gerhard, D-8911 Thaining (DE); SCHREIB, Franz, D-8000 München 71 (DE)
(86) Internationale Anmeldenummer: DE9300382
(87) Internationale Veröffentlichungsnummer: WO9323935

(56) Entgegenhaltungen:
- EP-A- 0 531 090
- PATENT ABSTRACTS OF JAPAN vol. 16, no. 31 (E-1159)
- ERICSSON REVIEW Bd. 64, Nr. 3, 1987, STOCKHOLM SE Seiten 151 - 159 M.K.B.HARUN ET AL. 'Malaysia Cellular System - Pioneer in Asia'

## Beschreibung

Die Erfindung bezieht sich auf ein mobiles Funknetz mit einer Anzahl von Basisstationen in gegenseitiger räumlicher Anordnung nach Art eines Zellularsystems, bei dem eine ringförmige Struktur mit um das Zentrum plazierten Zellringen vorgesehen ist sowie eine zentrale Basisstation im Zentrum mit auf einem erhöhten Standort installierten Antennen, die als stark bündelnde Richtantennen ausgebildet sind.

Im Rahmen der Versorgung von Regionen mit Mobilfunkdiensten besteht aufgrund von hohen Frequenzen und der Teilnehmerdichte in Ballungsräumen die Tendenz zu kleinen Funkzellen. Dadurch steigt jedoch auch die erforderliche Zahl von Basisstationen, was wiederum zu hohen Infrastrukturkosten führt.

Ein Funknetz der eingangs beschriebenen Art ist durch Patent Abstracts of Japan, Bd. 16, Nr. 31 (E - 1159) & JP-A-32-44224 bekannt. Dabei werden die ringförmig um eine zentrale Basisstation angeordneten Funkzonen (Zellen) von den auf einem erhöhten Standort im Zentrum der zentralen Basisstation installierten Antennen ausgeleuchtet. Die elektromagnetische Strahlung der stark bündelnden Richtantennen ist unter einem dem auszuleuchtenden Zellring entsprechenden Winkel schräg nach unten gerichtet.

In der älteren europäischen Patentanmeldung 0 531 090 im Sinne des Artikels 54(3) EPÜ ist eine Zell-Wiederbenutzungsaufteilung in einem Mobilfunksystem beschrieben, bei dem eine äußere Zelle und eine in der äußeren Zelle angeordnete innere Zelle vorgesehen sind. Die Antennen der Basisstation innerhalb der inneren Zelle strahlen unter einem entsprechenden Neigungswinkel auf die jeweiligen Zellen. Das Intervall von Zellen, die denselben Kanal oder dieselbe Frequenz in inneren Zellen benutzen, ist dabei kürzer als das Intervall in äußeren Zellen.

Der Erfindung liegt die Aufgabe zugrunde, eine Lösung anzugeben, um die Investitionen in der Infrastruktur zu reduzieren.

Diese Aufgabe wird bei einem mobilen Funknetz der einleitend beschriebenen Art gelöst durch eine Unterteilung der ringförmigen Struktur in Sektoren entsprechend der Anzahl der Zellen innerhalb jodes Zellrings, mit unterschiedlichen Frequenzen in benachbarten Sektoren, und durch eine Ausleuchtung aller Zellen bzw. den Empfang aus den einzelnen Zellen durch die zentrale Basisstation mit den Antennen in der Weise, daß wenigstens zwei vom Antennenstandort in radialer Richtung liegende Zellen innerhalb desselben Sektors mit jeweils derselben Frequenz versorgt werden.

Durch diese zentrale Anordnung der Basisstationen für die einzelnen Funkzellen an einem Ort und Ausleuchtung der Zellen über auf einem hohen Bauwerk/Masten positionierte Richtantennen ergibt sich eine Verringerung der Infrastrukturkosten, eine Reduzierung von Mehrwegeausbreitung, eine Erhöhung der Flexibilität bei der dynamischen Kanalzuweisung sowie die Möglichkeit des dynamischen Zell-Splittings.

Vorteilhafte Ausgestaltungen und Weiterbildungen des Erfindungsgegenstandes sind in den Unteransprüchen angegeben.

Nachstehend wird die Erfindung anhand von in der Zeichnung dargestellten Ausführungsbeispielen näher erläutert.

Es zeigen
- Figur 1: in schematischer Darstellung eine Netzstruktur mit zentaler Basisstation,
- Figur 2: ein Szenario mit fünf Entfernungsbereichen mit Cluster Size 4,
- Figur 3: ein Szenario mit fünf Entfernungsbereichen mit Cluster Size 8 und
- Figur 4: ein Szenario mit fünf Entfernungsbereichen mit variabler Zellenstruktur.

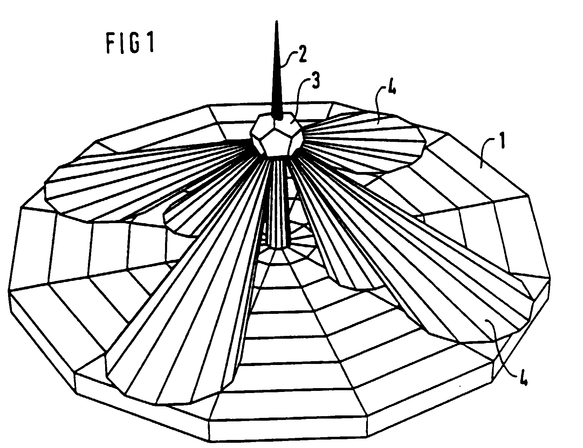

In Figur 1 ist eine Netzstruktur mit sieben Entfernungsbereichen dargestellt, die ringförmig um eine im Zentrum angeordnete Basisstation plaziert sind. Die Antennen 3 sind auf einem Turm 2 angeordnet, wobei es sinnvoll sein kann, auch die übrigen Einrichtungen der Basisstation möglichst in Antennennähe anzuordnen, um kurze Antennenzuleitungen zu erhalten. Einige von den Antennen 3 ausgehende Strahlungskeulen 4 sind eingezeichnet, die bestimmte Zellen 1 ausleuchten. Die Zellgrenzen sind dabei durch das Antennendiagramm festzulegen, um innerhalb eines Sektors mehrere Zellen mit derselben Frequenz zu versorgen.

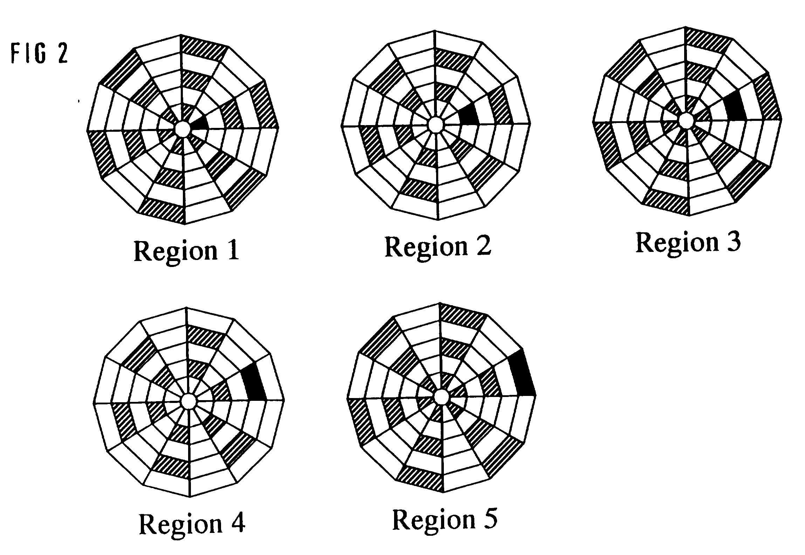

Figur 2 zeigt ein Szenario mit fünf Entfernungsbereichen mit Cluster Size 4. Entsprechend den fünf Entfernungsbereichen sind fünf Teildarstellungen gezeigt, die als Region 1 bis 5 bezeichnet sind. Die einzelnen Entfernungsbereiche sind ringförmig um eine in der Mitte angeordnete Basisstation plaziert. Jeder Entfernungsbereich besteht aus nebeneinander liegenden Zellen, deren Anzahl derjenigen der Sektoren entspricht, in die die Gesamtstruktur aufgeteilt ist. Im vorliegenden Beispiel sind es 12 Sektoren von jeweils 30°. Diese Zahl ist jedoch beliebig veränderbar, so daß breitere oder schmalere Sektoren entstehen und auch die Sektorengröße von Entfernungsbereich zu Entfernungsbereich unterschiedlich sein kann.

In Figur 2 ist in jeder Teildarstellung jeweils eine schwarz gezeichnete Zelle vorgesehen, die die jeweils betrachtete Zelle mit Träger darstellt und von Region 1 Bis Region 5 sich in jeweils einer der Entfernungsbereiche befindet. Ferner sind schraffiert gezeichnete Zellen vorgesehen, die in anderen Entfernungsbereichen und Sektoren liegen, die auf der gleichen Frequenz arbeiten wie die betrachtete schwarz gezeichnete Zelle. Die hellen Zellen in den einzelnen Darstellungen werden als neutrale Zellen bezeichnet und stellen benachbarte Zellen im gleichen Sektor oder Zellen benachbarter Sektoren dar, die auf unterschiedlicher Frequenz gegenüber der betrachteten Zelle mit Träger arbeiten.

Cluster Size 4 im betrachteten Beispiel bedeutet, daß in einem Sektor zwei verschiedene Frequenzen verwendet werden und in einem benachbarten Sektor wiederum zwei andere, von den erstgenannten verschiedene Frequenzen. Für die Teildarstellung Region 1 bedeutet dies, daß eine erste Frequenz f1 im Entfernungsbereich 1, 3 und 5 benutzt wird, eine davon verschiedene zweite Frequenz f2 in den Entfernungsbereichen 2 und 4. Hinsichtlich der Frequenzverwendung entsprechen sich somit die Teildarstellungen Region 1, Region 3 und Region 5 einerseits sowie die Teildarstellungen Region 2 und Region 4 andererseits.

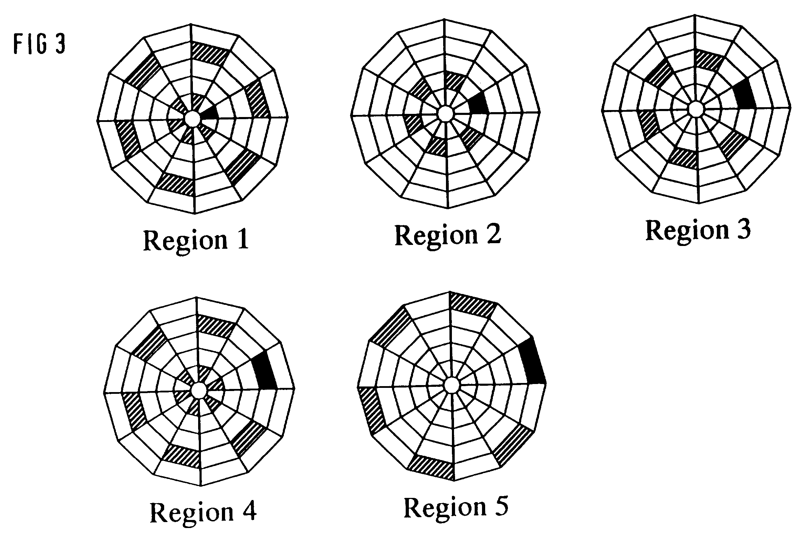

Beim Ausführungsbeispiel nach Figur 3 mit einem Szenario mit fünf Entfernungsbereichen mit Cluster Size 8 werden, unterschiedlich zum vorherigen Ausführungsbeispiel mit Cluster Size 4, in einem Sektor vier verschiedene Frequenzen verwendet und im benachbarten Sektor vier weitere, zu den erstgenannten unterschiedliche Frequenzen. Dabei ist vorgesehen, daß in der ersten Teildarstellung im ersten Entfernungsbereich eine erste Frequenz benutzt wird, die im vierten Entfernungsbereich wieder benutzt wird (siehe schwarzes Feld und schraffiertes Feld in den Entfernungsbereichen 1 und 4). Einen entsprechenden Fall zeigt die Teildarstellung 4 (Region 4), bei der die Zelle im ersten Entfernungsbereich schraffiert und die entsprechende Zelle im vierten Entfernungsbereich schwarz gezeichnet ist. Die drei weiteren der insgesamt vier in einem Sektor vorgesehenen Frequenzen werden in den Entfernungsbereichen 2, 3 und 5 benutzt (vgl. hierzu die schwarz gezeichneten Zellen in den Teilaarstellungen Region 2, Region 3 und Region 5).

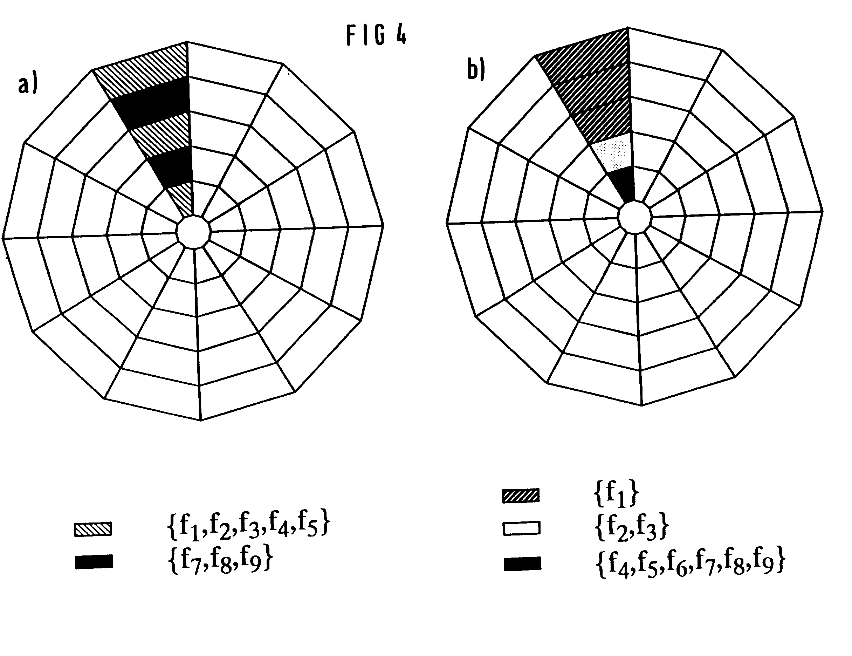

Figur 4 zeigt in zwei Teildarstellungen jeweils ein Beispiel für eine dynamische Kanalzuordnung. Die Netzstruktur entspricht hierbei der in den Figuren 2 und 3 dargestellten Ausführungsbeispiele. Bei der Anordnung nach Figur 4a ist vorgesehen, daß in den Zellen der Entfernungsbereiche 1, 3 und 5 jeweils auf den Frequenzen f1, f2, f3, f4, f5 gearbeitet wird und in den Zellen der Entfernungsbereiche 2 und 4 (dunkle Schraffur) auf den Frequenzen f7, f8, f9.

Die Anordnung nach Figur 4b zeigt ein Beispiel, in dem die Zellen mehrerer Entfernungsbereiche (Region 3, 4 und 5) zusammengefaßt werden zu einer Zelle, in der die Frequenz f1 benutzt wird. In der Zelle der zweiten Region werden die Frequenzen f2, f3 verwendet, während der Zelle der innersten Region die Frequenzen f4, f5, f6, f7, f8, f9 zur Verfügung stehen.

Anhand der Anordnungen nach Figur 4a und 4b wird also gezeigt, daß innerhalb der Zellen eine beliebige Verteilung der insgesamt zur Verfügung stehenden Frequenzen möglich ist und daß auch bei entsprechendem Bedarf beliebige Zellen zusammengefaßt werden können, die mit einer einzigen Frequenz arbeiten. Es ist also eine Anpassung an die jeweiligen verkehrsbedingten Situationen möglich. Eine solche Flexibilität hinsichtlich der Kanalzuteilung ist durch die erfindungsgemäße Netzstruktur mit einer zentralen, allen Zellen gemeinsamen Basisstation besonders günstig, da die Verwaltung für alle Zellen an einem Punkt erfolgt und somit interne Schaltungen besonders einfach durchzuführen sind. Dies ist ein wesentlicher Vorteil der erfindungsgemäßen Anordnung neben der vereinfachten und kostensparenden Infrastruktur durch Wegfall von vielen Basisstationen und deren Zusammenlegung an einer zentralen Stelle.

## Patentansprüche

1. Mobiles Funknetz mit einer Anzahl von Basisstationen in gegenseitiger räumlicher Anordnung nach Art eines Zellularsystems, bei dem eine ringförmige Struktur mit um das Zentrum plazierten Zellringen vorgesehen ist sowie eine zentrale Basisstation im Zentrum mit auf einem erhöhten Standort installierten Antennen (3), die als stark bündelnde Richtantennen ausgebildet sind
**gekennzeichnet durch**
eine Unterteilung der ringförmigen Struktur in Sektoren entsprechend der Anzahl der Zellen innerhalb jedes Zellrings, mit unterschiedlichen Frequenzen in benachbarten Sektoren, und durch eine Ausleuchtung aller Zellen bzw. den Empfang aus den einzelnen Zellen durch die zentrale Basisstation mit den Antennen (3) in der Weise, daß wenigstens zwei vom Antennenstandort in radialer Richtung liegende Zellen innerhalb desselben Sektors mit jeweils derselben Frequenz versorgt werden.

2. Mobiles Funknetz nach Anspruch 1, **dadurch gekennzeichnet,** daß die zwischen Zellen mit gleicher Frequenz liegende Anzahl von Zellen innerhalb eines Sektors variabel ist.

3. Mobiles Funknetz nach Anspruch 1 oder 2, **dadurch gekennzeichnet,** daß durch Zusammenfassung benachbarter Zellen gleicher oder benachbarter Sektoren zu einer neuen Zelle eine flexible Zellgestaltung erfolgt.

## Claims

1. Mobile radio network having a number of base stations in mutual spatial arrangement in the manner of a cellular system, in which there is provided a ring-shaped structure having cell rings positioned around the centre, as well as a central base station in the centre with antennae (3) installed at a raised location which are designed as strongly focussing directional antennae, characterized by a subdivision of the ring-shaped structure into sectors in accordance with the number of cells within each cell ring, with different frequencies in adjacent sectors, and by an illumination of all the cells, or the reception from the individual cells, respectively, by the central base station with the antennae (3) in such a manner that at least two cells lying in radial direction from the antenna location within the same sector are supplied with the same frequency in each case.

2. Mobile radio network according to Claim 1, characterized in that the number of cells within a sector lying between cells having the same frequency is variable.

3. Mobile radio network according to Claim 1 or 2, characterized in that a flexible cell structure is produced by combining adjacent cells of the same or adjacent sectors to form a new cell.

## Revendications

1. Réseau de radiocommunication pour le service mobile, comportant un certain nombre de stations de base, qui sont mutuellement disposées dans l'espace suivant un système de type cellulaire, dans lequel il est prévu une structure annulaire ayant des anneaux cellulaires placés autour du centre, ainsi qu'une station de base centrale au centre avec des antennes (3) installées sur un lieu d'implantation surélevé, qui sont réalisées sous la forme d'antennes directives à forte focalisation,
caractérisé par
une subdivision de la structure annulaire en un nombre de secteurs correspondant au nombre de cellules contenues dans chaque anneau cellulaire, avec des fréquences différentes dans des secteurs voisins, et par une couverture de toutes les cellules ou la réception par la station de base centrale à partir des diverses cellules avec les antennes (3), de telle sorte que deux cellules au moins d'un même secteur, situées dans la direction radiale à partir du lieu d'implantation des antennes, soient respectivement alimentées avec la même fréquence.

2. Réseau de radicommunication pour le service mobile selon la revendication 1, caractérisé par le fait que le nombre de cellules situées entre des cellules de même fréquence est variable à l'intérieur d'un secteur.

3. Réseau de radiocommunication pour le service mobile selon la revendication 1 ou 2, caractérisé par le fait qu'une structure flexible de cellules est obtenue par le regroupement en une nouvelle cellule de cellules voisines d'un même secteur ou de secteurs voisins.
